Europäisches Patentamt
European Patent Office
Office européen des brevets

(19)

(11) Publication number: **0 247 591 B1**

(12) # EUROPEAN PATENT SPECIFICATION

(45) Date of publication of patent specification: **06.03.91**

(51) Int. Cl.5: **C02F 1/50**, A01N 43/76

(21) Application number: **87107709.5**

(22) Date of filing: **27.05.87**

The file contains technical information submitted after the application was filed and not included in this specification

(54) **Method for treating air-cooling system's aqueous medium.**

(30) Priority: **27.05.86 US 866680**

(43) Date of publication of application:
**02.12.87 Bulletin 87/49**

(45) Publication of the grant of the patent:
**06.03.91 Bulletin 91/10**

(84) Designated Contracting States:
**CH DE ES FR GB IT LI SE**

(56) References cited:

**EP-A- 0 181 068**

**CHEMICAL ABSTRACTS, vol. 104, no. 1, 6th January 1986, page 308, no. 3348w, Columbus, Ohio, US; J.D.BERG et al.: "Disinfection resistance of Legionella pneumophila and Escherichia coli grown in continuous and batch culture" & WATER CHLORINATION CHEM. ENVIRON. IMPACT HEALTH EFF., PROC. CONF., 5th 1984 (PUB. 1985), 603-13**

**NTIS, Report W055507 (PB82-168535), pages 1-10, 30th November 1981, U.S. Department of Commerce, Washington, DC., US; S.D.WORLEY et al.: "New antimicrobial agents for treatment of water"**

(73) Proprietor: **PPG INDUSTRIES, INC.**
**One PPG Place**
**Pittsburgh Pennsylvania 15272(US)**

(72) Inventor: **Worley, Shelby Davis**
**410 Dixie Drive**
**Auburn, AL 36830(US)**
Inventor: **Swango, Larry James**
**819 East University Drive**
**Auburn, AL 36830(US)**

(74) Representative: **Sternagel, Hans-Günther, Dr. et al**
**Patentanwälte Dr. Michael Hann Dr. H.-G. Sternagel Sander Aue 30**
**W-5060 Bergisch Gladbach 2(DE)**

**EP 0 247 591 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

CHEMICAL ABSTRACTS, vol. 104, no. 11, 17th March 1986, page 474, no. 85313t, Columbus, Ohio, US; O.H.TUOVINEN et al.: "Survival of Legionella pneumophila under different disinfectant and physical conditions" & FEMS MICROBIOL. LETT. 1986, 33(1), 9-13

JOURNAL OF PHARMACEUTICAL SCIENCES, vol. 69, no. 11, November 1980, pages 1292-1295, American Pharmaceutical Association; H.H.KOHL et al.: "Antimicrobial activity of N-chloramine compounds"

JOURNAL OF PHARMACEUTICAL SCIENCES, vol. 65, no. 12, December 1976, pages 1737-1742, American Pharmaceutical Association; J.J.KAMINSKI et al.: "N-halo derivatives V: Comparative antimicrobial activity of soft N-chloramine systems"

CHEMICAL ABSTRACTS, vol. 99, no. 22, 28th November 1983, page 333, no. 181208m, Columbus, Ohio, US; S.D.WORLEY et al.: "A new water disinfectant; a comparative study" & IND. ENG. CHEM. PROD. RES. DEV. 1983, 22(4), 716-18

## Description

The present invention relates to the use of 3-chloro-2-oxazolidinone derivatives for the control and disinfection of halogen-sensitive microorganisms, particularly Legionella pneumophilia

U S -A- 4,000,293 and 3,931,213 describe the pre-paration of 3-chloro-2-oxazolidinones and further describes their use as bactericides. Moreover, the efficacy of 3-chloro-4,4-dimethyl-2-oxazolidinone for water disinfection has bean described in a number of publications, such as, "A Novel Chloramine Compound for Water Disinfection" by H. D. Burkett et al, Water Resources Bulletin, Vol. 17, No. 5, pages 874-879, October 1981; "Potential New Water Disinfectants" by S. D. Worley et al., Water Chlorination: Environmental Impact and Health Effects, Vol. 5, Chapter 98, R. L. Jolley, Ed. (1985); "Comparisons of a New N-Chloramine Compound with Free Chlorine as Disinfectants for Water", by S. D. Worley et al., Progress in Chemical Disinfection, Proceedings of the Second Biannual Conference, pp. 45-60 (1984); and "New Antimicrobial Agents For Treatment of Water" by S. D. Worley et al, NTIS, Report W 055507 (PB82-168535). These publications, however, do not address the efficacy of 3-chloro-4,4-dimethyl-2-oxazolidinone against Legionella pneumophilia or its use for the treatment of recirculating water used in air-cooling systems.

Chemical Abstracts Vol . 104, No. 1, 6th January, 1986 page 308, No. 3448W is a summary of a: paper presented by J.D. Berg et al , at the 5th Water Chlorination Chem. Environ Impact Health Eff. Proc. Conf., 1986 describing the disinfection resistance of Legionella pneumophilia and Escherichia coli grown in continuous and batch culture, mentioning that chlorine dioxide was effective in inactivating Leqionella pneumophilia .

The use of central air-cooling systems for office buildings, hotels, convention centers, hospitals, and apartment buildings is common. Many of such air-cooling systems utilize water to cool refrigerant condensers used to cool the circulating air. Such cooling water is generally recirculated due to the increased demand for limited supplies of treated water and because it has become economically attractive to do so.

Recirculating water in a typical central air-cooling system is an ideal environment for the growth of microorganisms of many types. Accordingly, the water is typically treated chemically, e.g., with chlorinating and other chemical disinfection agents, to prevent the growth of biofouling organisms and other microorganisms. Many of the chemicals used in such treatments are corrosive to materials of construction commonly used in the air-cooling system. Further, the effective period of disinfection of many of such chemicals, e.g., chlorine, is relatively short, thereby requiring frequent chemical treatments, which not only adds to the cost but also exacerbates the corrosion problem within the air-cooling system.

Growth of the pathogen Legionella pneumophilia in the recirculating aqueous medium of an air-cooling, e.g., closed cycle air-conditioning, systems has been documented. The leaking of such a contaminated aqueous medium into the air circulating ducts of the air-cooling system has resulted in the loss of human life.

It is the object of the invention to provide a disinfectant that is effective against legionella pneumophilia and which is relatively long lasting, and is relatively non-corrosive. This object is attained by the method for controlling the growth of microorganism in an aqueous medium by adding to said medium a bactericidal amount of 3-chloro-2-oxazoli-dinonen represented by the graphic formula

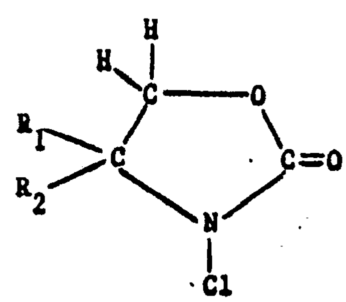

wherein $R_1$ is a $C_1$ -$C_4$ alkyl, and $R_2$ is selected from the group consisting of $C_1$ -$C_4$ alkyl, hydroxy, hydroxymethyl, $C_1$ -$C_4$ alkoxy and -Ph-R, wherein Ph is phenylene and R is selected from the group $C_1$ -$C_4$ alkyl , $C_1$ -$C_4$ alkoxy and hydroxy characterized in that the microorganism is Legionella pneumophila.

A specific 2-oxazolidinone such as 3-chloro-4.4-dimethyl-oxazolidinone can be used for disinfecting a surface contaminated with Leqionella pneumophilia by applying to said surface a biocidally effective amount of said compound.

It has now been found that certain 3-chloro-2-oxazoli-dinone derivatives, e.g., 3-chloro-4,4-di($C_1$-$C_4$)-alkyl-2-oxazoli-dinones, particularly 3-chloro-4,4-dimethyl-2-oxazolidinone, may be used to treat the recirculating aqueous medium in an air-cooling system to inhibit or prevent the contamination of such aqueous medium with Legionella pneumophilia. More particularly, the present invention is directed to the treatment of aqueous media contaminated with Legionella pneumophila with such 3-chloro-2-oxazolidinones to disinfect same and provide a continuous reserve of bactericide to prevent the grovth and spread of such organism. The 2-oxazolidinones described herein are relatively stable in aqueous solution under the conditions, e.g., temperature, pH, etc., generally existing in a closed cycle recirculating aqueous medium utilized in central air-conditioning units. Frequent replenishment of the 2-oxazolidinone is, therefore, not required. Further, the 2-oxazolidinones are less corrosive to materials of construction used in air-cooling systems, e.g., metal pipes and coils, cloth filters, wooden slats, etc., than is free chlorine, such as that provided by elemental chlorine or compounds which produce chlorine in the form of, for example, hypochlorite ion, such as calcium hypochlorite.

The 3-chloro-2-oxazolidinones described herein may be prepared by chlorination of the corresponding unhalogenated 2-oxazolidinone. Chlorination may be carried out with elemental chlorine in an aqueous medium at temperatures in the range of from $0^\circ$ C. to $10^\circ$ C. Alternatively, halogenation may be performed with an organic chlorinating reagent, such as trichloroisocyanuric acid, in an aqueous medium or a mixture of water and an inert organic solvent, such as chloroform, mechylene chloride or ethylene chloride. Chlorination with an organic chlorinating agent may be conducted at ambient temperatures. Unhalogenated 2-oxazolidinones may be prepared by reaction of a corresponding alknolamine with a di(lower alkyl) carbonate such as diethylcarbonate in the presence of a strong base such as an alkali metal alkoxide, e.g., sodium methoxide, or with gaseous phosgene.

The 2-oxazolidinones that may be used in the present process can be represented by the following graphic formula I,

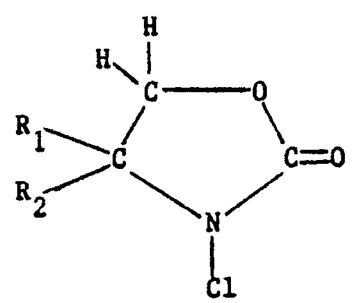

(I)

wherein $R_1$ is $C_1$-$C_4$ alkyl, such as methyl, ethyl, propyl, isopropyl, butyl, isobutyl and secondary butyl, and $R_2$ is selected from the group $R_1$, i.e., $C_1$-$C_4$ alkyl, hydroxy, hydroxymethyl, $C_1$-$C_4$ alkoxy, such as methoxy, ethoxy, propoxy, isopropoxy and butoxy, e.g., n-butoxy, isobutoxy and secondary butoxy, and substituted phenyl (-Ph-R), particularly para-substituted phenyl, wherein Ph is bivalent substitute phenyl (phenylene) and said phenyl substituents, R, are each selected from the group consisting of $C_1$-$C_4$ alkyl, $C_1$-$C_4$ alkoxy and hydroxy. Preferably, $R_1$ and $R_2$ are a $C_1$-$C_4$ alkyl and, more preferably, are selected from the group consisting of methyl and ethyl. Preferably, $R_1$ and $R_2$ are the same, and still more preferably are methyl.

Examples of suitable 2-oxazolidinones that maybe used in the present method include: 3-chloro-4,4-dimethyl-2-oxazolidinone, 3-chloro-4,4-diethyl-2-oxazolidinone, 3-chloro-4-methyl, 4-ethyl-2-oxazolidinone, 3-chloro-4-methyl-4-hydroxy-2-oxazolidinone, 3-chloro-4-methyl-4-methoxy-2-oxazolidinone, 3-chloro-4-methyl, 4-hydroxymethyl-2-oxazolidinone, and 3-chloro-4-methyl-4-p-mechylphenyl-2-oxazolidinone. By substitution of other $R_1$ and $R_2$ named substituents at the 4-position of the 3-chloro-2-oxazolidinone for the specifically enumerated substituents listed hereinbefore, other analogous oxazolidinone derivatives may be named. The preferred 2-oxazolidinone is 3-chloro-4,4-dimethyl-2-oxazolidinone.

The amount of the aforesaid 2-oxazolidinone bactericide added to the recirculating aqueous medium should be an amount that is sufficient to disinfect the water of undesired halogen-sensitive microorganisms, e.g., bacteria, fungi, viruses and protozoa. Such amount may be characterized as a biocidally effective amount of the 2-oxazolidinone. In terms of specific microrganisms, such amounts may be expressed as bactericidal, fungicidal, virucidal or protozoacidal amounts. More particularly, sufficient of the 2-oxazolidinone biocide should be used to establish within the aqueous medium a concentration of from 0.3 to 20 parts per million of potential positive chlorine provided by the 2-oxazolidinone compound. More typically, sufficient of the compound is used to establish between 0.5 and 5, e.g., between 1 and 3, parts per million

of potential positive chlorine. Such amounts are deemed to be sufficient to prevent the growth of pathogens, such as Legionella pneumophilia, and other bacteria in the recirculating aqueous medium, and the subsequent spread of such bacteria outside the immediate environment of the air-cooling system.

In addition to adding the aforedescribed 2-oxazolidinones to the recirculating aqueous medium of the air-cooling system, it is also contemplated that the described 2-oxazolidinones may be used as an additive to a biologically-active composition, e.g., a disinfecting, germicidal, sanitizing or other biocidal application for treatment of solid surfaces contaminated with Legionella pneumophilia. Such compositions may take the form of liquid or solid formulations, including formulations in the physical state of finely-divided powders and granular materials, liquids such as solutions, concentrates, emulsifiable concentrates, slurries and the like. The 2-oxazolidinones may be used alone or in combination with other known biologically-active materials, such as other bactericides, fungicides, virucides, protozoacides, etc. In addition to the biocidally active ingredient, such germicidal compositions may also include without limitation finely divided dry or liquid diluents, extenders, fillers, conditioners, including various clays, phosphates, silicates, diatomaceous earth, talc, alumina-silica materials, liquid extenders, solvents, diluents or the like, including water and various organic liquids such as chlorinated benzenes, acetone, cyclohexanone, xylenes, chlorinated xylene, carbon disulfide, carbon tetrachloride, ethylene dichloride, and various mixtures thereof.

The present process is more particularly described in the following examples which are intended as illustrative only since numerous modifications and variations therein will be apparent to those skilled in the art.

## Example 1

Organic demand-free buffered water containing 2 x $10^6$ cells per milliliter of the organism Legionella pneumophilia was diluted with an equal part of an aqueous solution of 3-chloro-4,4-dimethyl-2-oxazolidinone (Compound A) so that the final concentration of the Legionella pneumophilia cells in the test medium was 1 x $10^6$ cells per milliliter and the concentration of positive chlorine from the 2-oxazolidinone was 1 milligram per liter. Similar test solutions were prepared with total positive chlorine concentrations from 3-chloro-4,4-dimethyl-2-oxazolidinone of 2, 5, 10, and 20 milligrams per liter. Aliquots were withdrawn at various times from each of the test solutions, the aliquots quenched with sodium thiosulfate, diluted and applied to the surface of a Petri dish containing a growth medium for Legionella pneumophilia, thereby to determine the presence, viability and number of the surviving organisms. Organic demand-free water (DFW) was prepared by treating distilled, deionized water with chlorine and sunlight to remove any organic load present in the water. For comparison, similar test solutions were prepared using calcium hypochlorite (Compound B) as a source of chlorine. The experiments were conducted at pH 7.0 and 9.5 and at three temperatures. A 0.05 molar phosphate buffer and a 0.01 molar borate/sodium hydroxide buffer were used respectively to maintain the test mediums at the pHs of 7.0 and 9.5. Results and conditions are tabulated in Table I.

## Example 2

The procedure of Example 1 was repeated at a pH of 9.5 and at 4° C. for both Compound A and Compound B except that a synthetic organic demand water (SDW) was used as the test medium. This synthetic organic demand water was prepared by mixing the following reagents with organic demand-free water: 375 milligrams per liter of each of the inorganic salts, calcium chloride, magnesium chloride, potassium chloride and sodium chloride; 50 milligrams per liter of bentonite clay; 30 milligrams per liter of humic acid; 0.01 percent final concentration of heat-treated horse serum and 5 x $10^5$ cells per milliliter of heat-killed Saccharomyces cerevisiae. Results are tabulated in Table II.

TABLE I

TIME TO EFFECT 99.99% KILL OF LEGIONELLA PNEUMOPHILIA IN DFW

| Compound | pH | Temp, °C. | Concentration, ppm ($Cl^+$) 20 | 10 | 5 | 2 | 1 |
|---|---|---|---|---|---|---|---|
| A | 7.0 | 4 | 2 mins. | 5 mins. | 30 mins. | 30 mins. | 30 mins. |
| A | 7.0 | 22 | 2 mins. | 5 mins. | 30 mins. | 30 mins. | 30 mins. |
| A | 7.0 | 37 | 2 mins. | 5 mins. | 10 mins. | 30 mins. | 30 mins. |
| A | 9.5 | 37 | 1 min. | 1 min. | 10 mins. | 30 mins. | 30 mins. |
| A | 9.5 | 22 | 1 min. | 2 mins. | 10 mins. | 10 mins. | 30 mins. |
| A | 9.5 | 4 | 2 mins. | 5 mins. | 10 mins. | 30 mins. | 30 mins. |
| B | 9.5 | 4 | 1 min. | 1 min. | 1 min. | 1 min. | 1 min. |

TABLE II

TIME TO EFFECT 99.99% KILL OF LEGIONELLA PNEUMOPHILIA IN SDW

| Compound | pH | Temp, °C. | Concentration, ppm ($Cl^+$) 20 | 10 | 5 | 2 | 1 |
|---|---|---|---|---|---|---|---|
| A | 9.5 | 4 | 2 mins. | 10 mins. | 10 mins. | 30 mins. | 30 mins. |
| B | 9.5 | 4 | 1 min. | 2 mins. | 2 mins. | 5 mins. | 5 mins. |

The data of Tables I and II show that free chlorine available from calcium hypochlorite kills Legionella pneumophilia faster than does the 2-oxazolidinone compound tested but that the 2-oxazolidinone kills the organism effectively even at 1 part per million (1 milligram per liter) total positive chlorine in 30 minutes at all temperatures studied. The greater stability of the 2-oxazolidinone compound compared to calcium hypochlorite results in the availability of a biocidal amount of chlorine for bactericidal action against Legionella pneumophilia over a prolonged period of time, thus reducing the frequency of treatment required. The greater stability of 3-chloro-4,4-dimethyl-2-oxazolidinone, viz a viz calcium hypochlorite, has been reported. See, for example, "The Stability in Water of a New Chloramine Disinfectant as a Function of pH, Temperature, and Water Quality", by S. D. Worley et al, Water Resources Bulletin, Vol. 20, No. 3, pp. 365-368, June 1984. Since excessive speed is not a critical factor for disinfection of recirculating aqueous medium in an air-cooling system, the 2-oxazolidinone compounds should be economically attractive for use in the application, particularly in light of the greater corrosivity of calcium hypochlorite and elemental chlorine to materials of construction in air cooling system than 3-chloro-4,4-dimethyl-2-oxazolidinone.

Although the present process has been described with reference to specific details of certain embodiments thereof, it is not intended that such detail should be regarded as limitations upon the scope of the invention except as and to the extent that they are included in the accompanying claims.

The amount of the aforesaid 2-oxazolidinone bactericide added to establish the potential positive chlorine
is from 1 mg/l to 600 mg/l,
preferably from 3 mg/l to 150 mg/l, most
preferred from 6 mg/l to 90 mg/l.

The amounts depend on the molecular weight of the derivatives and in the case of the preferred derivatives mentioned on page 4 the amounts are 1.5 to 12.5 mg/l, 3.0 to 30.5 mg/l and 6 to 20 mg/l.

## Claims

1. A method for controlling the growth of microorganism in an aqueous medium by adding to said medium a bactericidal amount of 3-chloro-2-oxazolidinone represented by the graphic formula

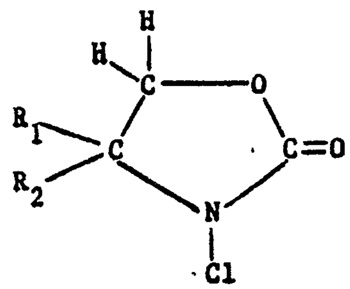

wherein $R_1$ is a $C_1$-$C_4$ alkyl , and $R_2$ is selected from the group consisting of $C_1$ -$C_4$ alkyl, hydroxy, hydroxymethyl, $C_1$ -$C_4$ alkoxy and -Ph-R, wherein Ph is phenylene and R is selected from the group $C_1$ -$C_4$ alkyl . $C_1$ -$C_4$ alkoxy and hydroxy, **characterized in that** the microorganism is Legionella pneumophila .

2. A method of disinfecting a surface contaminated with a microorganism, **characterized by** applying to said surface contaminated with Leqionella pneumophila a biocidally effective amount of 3-chloro-4.4-dimethyl-2-oxazolidinone.

3. The method of claim 1 wherein said aqueous medium is the recirculation medium of an air cooling system.

4. The method of claims 1 or 2 wherein the 3-chloro-2-oxazolidinone compound is a 3-chloro-4.4-di ($C_1$-$C_4$) alkyl-2-oxazolidinone.

5. The method of claim 4 wherein said 3-chloro-2-oxazolidinone is 3-chloro-4.4-dimethyl-2-oxazolidinone.

6. The method of any of claims 1 to 5 wherein the amount of the 2-oxazolidinone added to the aqueous medium or applied to the surface is sufficient to establish a concentration of from 0.3 to 20 parts per million of potential positive chlorine.

7. The method of claim 5 wherein the amount of the 3-chloro-4.4-dimethyl-2-oxazolidinone added to the aqueous medium is sufficient to establish a concentration of from 0.5 to 5 parts per million of potential positive chlorine in the aqueous medium.

8. The method of claim 6, wherein said amount is from 1 mg/l to 600 mg/l aqueous medium.

## Revendications

1. Procédé pour maîtriser la croissance d'un microorganisme dans un milieu aqueux, par addition, audit milieu, d'une quantité bactéricide de 3-chloro-2-oxazolidinone, représentée par la formule développée suivante :

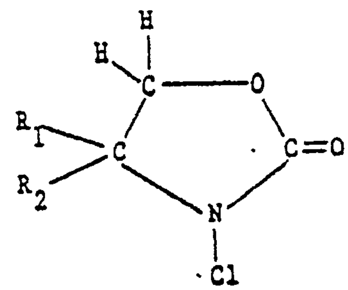

dans laquelle $R_1$ est un radical alkyle en $C_1$-$C_4$ et $R_2$ est choisi dans l'ensemble constitué des radicaux alkyle en $C_1$-$C_4$, hydroxy, hydroxyméthyle, alcoxy en $C_1$-$C_4$ et -Ph-R, où Ph est le phénylène et R est choisi dans l'ensemble comprenant les radicaux alkyle en $C_1$-$C_4$, alcoxy en $C_1$-$C_4$ et hydroxy, caractérisé en ce que le microorganisme est Legionella pneumophila.

2. Procédé de désinfection d'une surface contaminée par un microorganisme, caractérisé en ce qu'il consiste à appliquer sur ladite surface contaminée par Legionella pneumo phila une quantité à effet biocide de 3-chloro-4,4-diméthyl-2-oxazolidinone.

3. Procédé selon la revendication 1, dans lequel ledit milieu aqueux est le fluide de recirculation d'un circuit de refroidissement d'air.

4. Procédé selon les revendications 1 ou 2, dans lequel le composé 3-chloro-2-oxazolidinone est une 3-chloro-4,4-di(alkyle en $C_1$-$C_4$)-2-oxazolidinone.

5. Procédé selon la revendication 4, dans lequel ladite 3-chloro-2-oxazolidinone est la 3-chloro-4,4-diméthyl-2-oxazolidinone.

6. Procédé selon l'une quelconque des revendications 1 à 5, dans lequel la quantité de 2-oxazolidinone ajoutée au milieu aqueux ou appliquée sur la surface est suffisante pour créer une concentration de 0,3 à 20 parties par million de chlore positif potentiel.

7. Procédé selon la revendication 5, dans lequel la quantité de 3-chloro-4,4-diméthyl-2-oxazolidinone ajoutée au milieu aqueux est suffisante pour créer une concentration de 0,5 à 5 parties par million de chlore positif potentiel dans le milieu aqueux.

8. Procédé selon la revendication 6, dans lequel ladite quantité est de 1 mg/l à 600 mg/l de milieu aqueux.

## Ansprüche

1. Verfahren zum Steuern des Wachstums von Mikroorganismen in einem wäßrigen Medium durch Zusetzen zu dem Medium einer bakteriziden Menge von 3-Chlor-2-oxazolidinon der Strukturformel

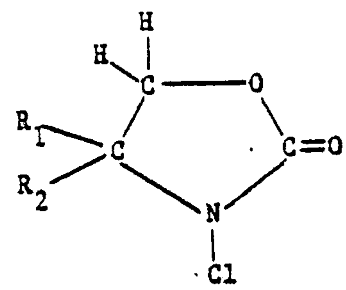

in der $R_1$ eine $C_1$ -$C_4$ Alkylgruppe ist und $R_2$ aus der aus $C_1$ -$C_4$ Alkyl, Hydroxy, Hydroxymethyl, $C_1$-$C_4$

Alkoxy und -Ph-R bestehenden Gruppe ausgewählt ist, wobei Ph Phenylen ist und R aus der aus $C_1$ -$C_4$ Alkyl, $C_1$ -$C_4$ PH Phenylen ist und R aus der aus $C_1$ -$C_4$ Alkyl, $C_1$ -$C_4$ Alkoxy und Hydroxy bestehenden Gruppe ausgewählt ist, **dadurch gekennzeichnet**, daß der Mikroorganismus Legionella pneumophilia ist.

2. Verfahren zum Desinfizieren einer mit einem Mikroorganismus verunreinigten Oberfläche, **gekennzeichnet durch** Aufbringen einer mit Legionella pneumophilia verunreinigten Oberfläche einer biozid wirksamen Menge von 3-Chlor-4,4-dimethyl-2-oxazolidinon.

3. Verfahren nach Anspruch 1, **dadurch gekennzeichnet**, daß das wäßrige Medium das umlaufende Medium eines Luftkühlungssystems ist.

4. Verfahren nach Ansprüchen 1 oder 2, **dadurch gekennzeichnet**, daß die 3-Chlor-2-oxazolidinonverbindung ein 3-Chlor-4,4-di ($C_1$-$C_4$)alkyl-2-oxazolidinon ist.

5. Verfahren nach Anspruch 4, **dadurch gekennzeichnet**, daß das 3-Chlor-2-oxazolidinon 3-Chlor-4,4-dime-thyl-2-oxazolidinon ist.

6. Verfahren nach jedem der Ansprüche 1 bis 5, **dadurch gekennzeichnet**, daß die dem wäßrigen Medium zugesetzte oder auf die Oberfläche aufgebrachte Menge des 2-Oxazolidinons ausreichend ist, um eine Konzentration von 0,3 bis 20 Teilen pro Million potentiell positiven Chlors zu erzeugen.

7. Verfahren nach Anspruch 5, **dadurch gekennzeichnet**, daß die dem wäßrigen Medium zugesetzte Menge an 3-Chlor-4,4-dimethyl-2-oxazolidinon ausreichend ist, um eine Konzentration von 0,5 bis 5 Teilen pro Million potentiell positiven Chlors im wäßrigen Medium zu erzeugen.

8. Verfahren nach Anspruch 6, **dadurch gekennzeichnet**, daß die Menge von 1 mg/l bis 600 mg/l wäßrigem Medium beträgt.